Europäisches Patentamt

**European Patent Office**

Office européen des brevets

(19)

(11) Publication number: **0 198 129**
A2

(12)

# EUROPEAN PATENT APPLICATION

(21) Application number: **85201005.7**

(22) Date of filing: **25.06.85**

(51) Int. Cl.⁴: **F 16 K 11/087**

(30) Priority: **16.04.85 IT 6735785**

(43) Date of publication of application: **22.10.86**
**Bulletin 86/43**

(84) Designated Contracting States: **AT BE CH DE FR GB LI
LU NL SE**

(71) Applicant: **AGIP PETROLI S.p.A., Via Laurentina 449,
I-00142 Roma (IT)**

(72) Inventor: **Dorrucci, Riccardo, via Proceno, N. 19,
I-00191 Roma (IT)**

(74) Representative: **Robba, Eugenio, Studio
"INTERPATENT" via Caboto 35, I-10129 Turin (IT)**

(54) **Improved on-off and selector valve of the ball type, and valve assembly using the same.**

(57) The valve comprises a body (10) having three or five ways, and a ball type closure plug (12) provided with an inner channel (20) set at an angle of 90°.

The valve is actuated by a pneumatic actuator and permits to select two or four of the possible flow directrices or to intercept the flow completely.

Sealing is improved by the adoption of an assembly constituted by an inner seat member (22) and an outer seat member (26) locked together by a ring (28) and biased by springs (32) adapted to press a sealing ring (30), made of elastomeric material and coated with a sheath (31), against the ball type closure plug (12).

The five-way valve (40) and the three-way valve (42) can be coupled through the respective axial apertures to provide a valve assembly adapted to be used for discharging partitioned tank trucks for petroleum products to dispensing counters.

0198129

- 1 -

"Improved on-off and selector valve of the ball type, and valve assembly using the same"

The present invention relates to an improved on-off and selector valve of the ball type and a valve assembly using the same.

In Italian utility model patent application No. 35,983-B/83, filed July 22, 1983, there has been described a five-way on-off and selector valve constituted by a body having four radial and one axial aperture and a ball type closure plug with a recess set at an angle of 90°, so that the valve can alternatively intercept five flow lines or select one of the four available flow directrices.

In the application of this valve to partitioned volumetric tank trucks for transport of petroleum products to the road distribution network, however, problems have arisen with regard to sealing. of the valve and it has been found necessary to provide a valve assembly capable of efficiently diverting the flow of various products (for example, petrol and gas oil) coming from different compartments of the tank truck, to only two dispensing counters.

It is an object of the present invention to solve the above-mentioned technical problems by providing an on-off and selector valve which has an improved and efficient sealing system and, moreover, is automatically controlled.

Another object of the invention is to provide a valve assembly which is capable of receiving the flow from four different lines, for example, four compartments of a tank truck, and of completely intercepting this flow or alternatively divert it, without any possibility of mixing, to only two discharge openings connected, for example, to the dispensing counters for petrol and gas oil.

The above and other objects and advantages of the invention, which will become apparent from the following description, are achieved by an on-off and selector valve comprising a body provided with at least two radial apertures whose axes lie on the same plane, an axial aperture whose axis is perpendicular to said plane, and a closure plug of the ball type, provided with an inner duct set at an angle of 90° and adapted to close or connect said axial aperture with one of the two above-mentioned radial apertures, characterized in that a sealing assembly is interposed between said body and closure plug adjacent said apertures and is constituted by a ring of elastomeric material contacting said closure plug and accommodated in a seat member provided between the periphery of an inner cylindrical seat - which is coaxial to said apertures of the valve body - and the inner profile of an outer cylindrical seat member mounted on said inner cylindrical seat member with the interposition of a locking ring, said outer cylindrical seat member being biased against said closure plug by a plurality of springs accommodated in seats provided in the connection flanges of said apertures.

A preferred embodiment of the invention, given by way of a nonlimiting example, will now be described with reference to the accompanying drawings, in which:

Fig. 1 is an axial section through a valve according to the invention;

Fig. 2 is a top plan view of the valve of Fig. 1, partly in section according to a transverse plane;

Fig. 3 illustrates in section an enlarged detal of Fig. 1;

Fig. 4 is an elevational view, partly in section, of an assembly constituted by two valves according to the invention, one having three ways and one having five ways, and

Fig. 5 is an enlarged sectional view showing in perspective a detail of the control mechanism of the valve according to the invention.

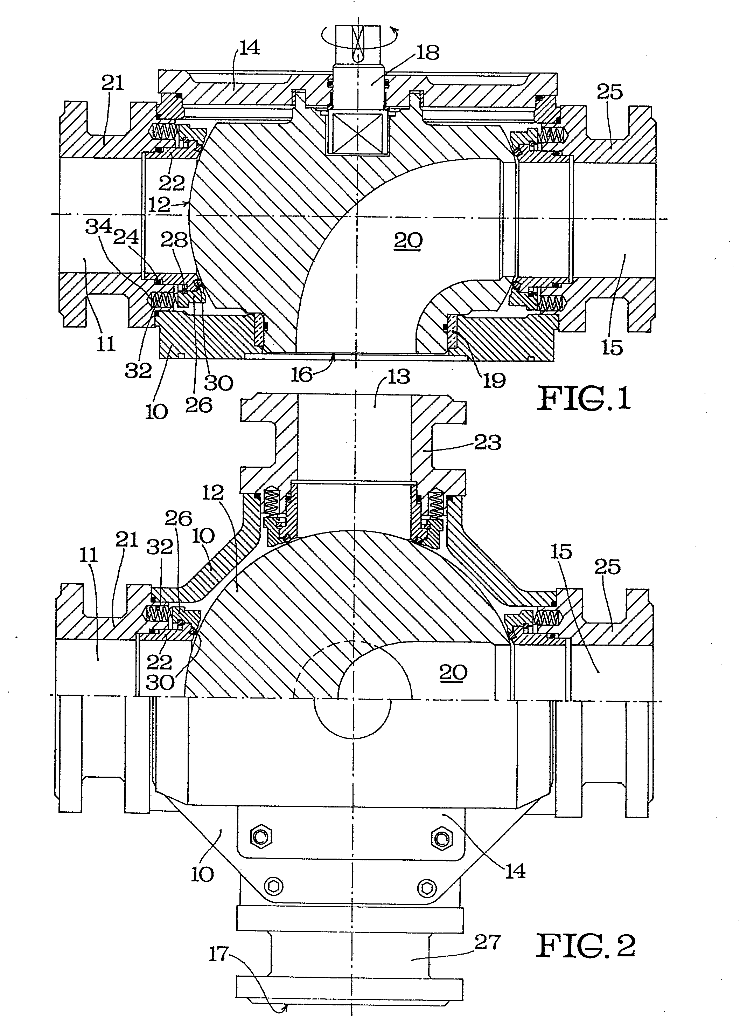

Referring to Figs. 1, 2 and 3, there is shown an on-off and selector valve of the type having five ways. It substantially comprises a body 10 containing a closure plug 12 and provided with a cover 14. The body 10 is provided with four radial apertures 11, 13, 15, 17 whose axes lie on the same plane and are arranged at 90°, and an axial aperture 16 whose axis is perpendicular to the plane containing the above-mentioned four axes. The closure plug 12 is of the ball type which is cut out in the upper part spherical portion where the rotatable pin 18 for its actuation is located. The ball is also cut away downwardly so as to be supported on the body through a sleeve 19 which permits its rotation.

A channel 20 is provided at an angle of 90° in the closure plug 12 and has a free line of passage which communicates the axial aperture 16 with only one of the four radial apertures 11, 13, 15 and 17.

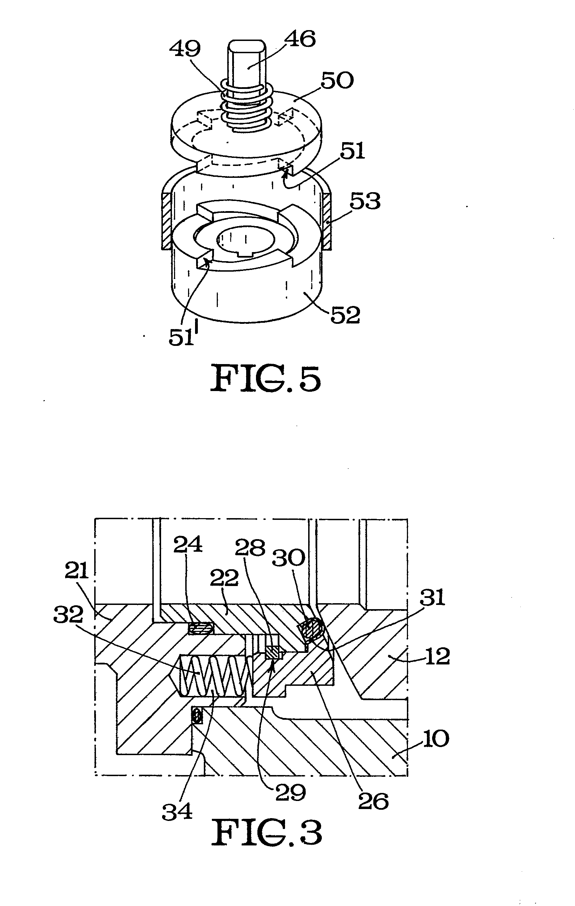

Adjacent the radial apertures, the body 10 is provided with connection flanges 21, 23, 25 and 27 for connection of the valve to fluid conduits, not shown. Mounted between said connection flanges and the closure plug is a sealing assembly shown in detail in Fig. 3. It comprises an inner seat member 22 mounted in the connection flange 21, and an outer seat member 26 mounted on the inner seat member 22 by means of a locking ring 28 which is inserted in a circumferential inner groove 29 in the seat member 26. The width of this groove is greater than the thickness of the ring 28 so that the outer seat member 26 can move to a limited extent in the axial direction on the inner seat member 22 under the action of helical springs 32 accommodated in appropriate seats 34 provided in the connection flanges 21. The outer and inner circumferential portions of the inner seat member 22 and outer seat member 26, respectively, define the seat of the actual sealing ring 30 against the closure plug 12.

The sealing ring 30 is preferably made of NBR nitrile rubber coated with a sheath 31 of polytetrafluorethylene (for example, the material marked by E.I. du Pont de Nemours & Co. under the trade mark "TEFLON").

The function of the springs 32 is particularly that of ensuring sealing under low fluid pressure as under high pressure it is the fluid itself that biases the seat members against the closure plug 12, thus ensuring sealing.

By rotating the closure plug 12 through 90° about its vertical axis, the axial opening 16 is connected to each of the radial apertures and the valve is so designed that the distance between two contiguous radial apertures is not smaller than the diameter of the angled channel 20 so that by rotating the closure plug through only 45° the flow is cut-off and thus the valve closed.

Thus it permits to either completely intercept the flow or to select only one of four possible flow directrices.

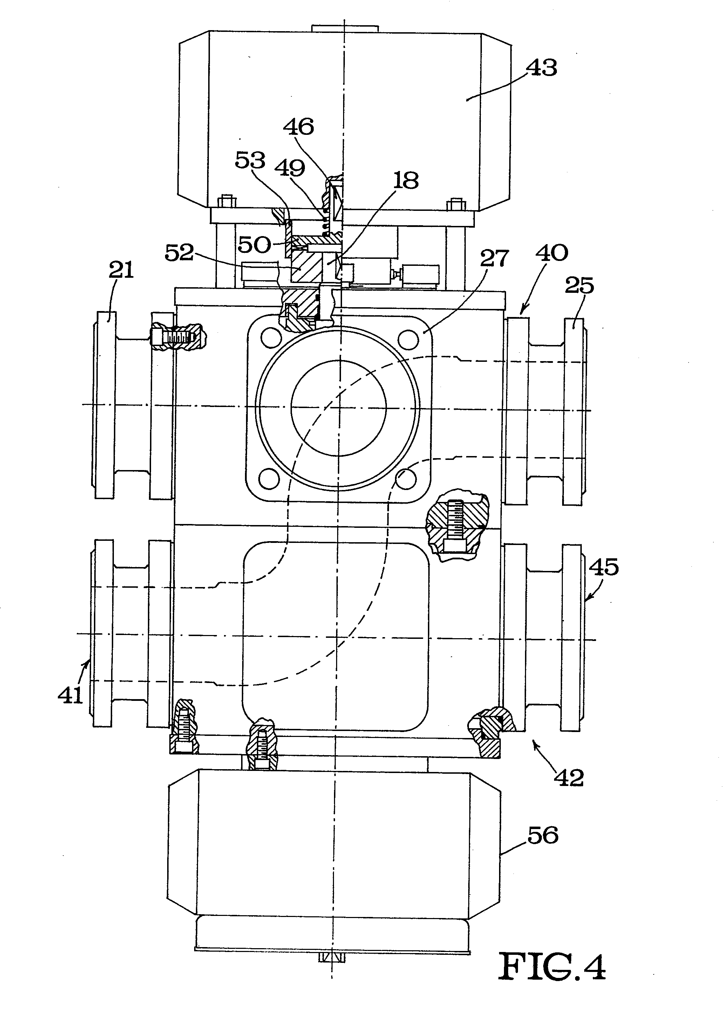

Fig. 4 shows a valve assembly constituted by an upper five-way valve and a lower three-way valve directly coupled through respective axial apertures. Such an assembly is particularly useful for discharging tank trucks having four compartments for petroleum products, wherein it is necessary to feed the product coming from the four compartments to one or the other of the two dispensing counters for petrol or gas oil without any possibility of reciprocal mixing.

The upper five-way valve is generally indicated by 40 and the three-way valve is indicated by 42. The latter is completely identical to the five-way valve except that it comprises only two radial apertures 41 and 45.

The five-way valve 40 is controlled by a simple-acting pneumatic actuator contained in the casing 43, which through a rack kinematic mechanism, not shown, converts the rectilinear motion of the piston into rotary motion of the actuating pin 46. Coupling of the actuating pin 46 to the driver pin 18 secured to the closure plug is obtained by a joint shown in detail in Fig. 5 and constituted substantially by two hubs 50, 52 provided on the two opposed surfaces with triangular jaws 51, 51' adapted to be coupled and uncoupled by the action of the spring 49 within the cylinder guide member 53.

Thus, the rotation of the ball type closure plug can be obtained to select the flow directrix or intercept the flow.

The three-way valve 42 is controlled by a double-acting pneumatic actuator contained in the casing 56 to divert the flow coming from the five-way valve either towards the aperture 41 or towards the aperture 45 or to intercept it.

Thus, with the valve assembly according to the invention the flow coming from four different compartments or reservoirs can be advantageusly selected or cut-off or fed to two independent and different outlet openings without any possibility of mixing the fluid.

It is to be understood that in its practical construction the valve assembly can be equipped with appropriate sensors adapted to signal to a control board which radial apertures are in communication with the product to be discharged and if the valve is open or closed.

In the application for low pressures, the valve is preferably made of a light aluminium alloy having a low silicon content with a face-hardening treatment of the ball by anodic oxidation, while for applications in more severe conditions it can be made of metallic materials of higher strength, for example, stainless steel.

Obviously a preferred embodiment of the invention has been described, but numerous modifications and variations can be made therein within the scope of the same inventive idea.

CLAIMS

1. On-off and selector valve comprising a body (10) provided with at least two radial apertures (11, 15) whose axes lie on the same plane, an axial aperture (16) whose axis is perpendicular to said plane, and a closure plug (12) of the ball type, provided with an inner duct (20) set at an angle of 90° and adapted to close or connect said axial aperture (16) with one of said two radial apertures (11, 15), characterized in that a sealing assembly is interposed between said body (10) and said closure plug (12) adjacent said apertures (11, 15) and is constituted by a ring (30) of elastomeric material contacting said closure plug (12) and accommodated in a seat provided between the periphery of an inner cylindrical seat member (22) extending coaxially to said apertures (11, 15) of the valve body (10), and the inner profile of an outer cylindrical seat member (26) mounted on said inner cylindrical seat member (22) with the interposition of a locking ring (28), said outer cylindrical seat member (26) being biased towards said closure plug (12) by a plurality of springs (32) accommodated in seats (34) provided in the connection flanges (21, 25) of said apertures (11, 15) of the body (10).

2. On-off and selector valve according to claim 1, characterized in that said radial apertures are four (11, 13, 15, 17) and the distances between the contiguous profiles of two adjacent apertures is greater than said angled duct (20) of the closure plug (12).

3. On-off and selector valve according to claim 1, characterized in that said locking ring (28) is inserted in an inner circumferential groove (29) of said outer seat member (26), the width of said groove (29) being greater than the thickness of said locking ring (28).

4. Interceptior and selector valve according to claim 1, characterized in that said sealing ring (30) is coated with an outer sheath (31).

5. On-off and selector valve according to claim 1, characterized in that said sealing ring (30) is made of nitrile rubber.

6. On-off and selector valve according to claims 1 and 4, characterized in that said outer sheath (31) is made of polytetrafluorethylene.

7. On-off and selector valve assembly constituted by a five-way valve (40) and a three-way valve (42) according to the preceding claims.

8. Valve assembly according to claim 7, characterized in that said valves (40, 42) are directly connected by the respective axial apertures.

9. Valve assembly according to claims 7 and 8, characterized in that said five-way valve (40) is controlled by a pneumatic actuator through a joint comprising two hubs (50, 52) provided with front claws (51, 51') and a return spring (49) connected to an actuating pin (46) and a driver pin (18), respectively, with the latter secured axially to the closure plug (12).

0198129

FIG.1

FIG.2

**FIG.5**

**FIG.3**

FIG.4